(19)

Europäisches
Patentamt
European
Patent Office
Office européen
des brevets

(11) **EP 2 827 298 A1**

(12) **EUROPEAN PATENT APPLICATION**

(43) Date of publication:
**21.01.2015 Bulletin 2015/04**

(51) Int Cl.:
***G06T 7/00*** *(2006.01)*

(21) Application number: **13176627.1**

(22) Date of filing: **16.07.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Schmidt, Carsten**<br>  **99423 Weimar (DE)**<br>• **Lautenschläger, Christian**<br>  **07743 Jena (DE)**<br>• **Denzler, Joachim**<br>  **07743 Jena (DE)**<br>• **Süsse, Herbert**<br>  **07381 Kleindembach (DE)**<br>• **Ortmann, Wolfgang**<br>  **07745 Jena (DE)** |
| (71) Applicants:<br>• **Universitätsklinikum Jena**<br>  **07743 Jena (DE)**<br>• **Friedrich-Schiller-Universität Jena**<br>  **07743 Jena (DE)** | (74) Representative: **Schulz, Ben Jesko**<br>**Schulz Junghans**<br>**Patentanwälte PartGmbB**<br>**Großbeerenstraße 71**<br>**10963 Berlin (DE)** |
| (72) Inventors:<br>• **Stallmach, Andreas**<br>  **07743 Jena (DE)** | |

(54) **Method and computer program for filtering and particularly segmenting and/or analyzing anatomic structures in a digital image**

(57)    The present invention relates to a method for filtering, and particularly segmenting and/or analyzing anatomic structures in an image (1) comprising pixels, wherein a pixel value is associated to each pixel, and wherein the structure tensor is determined for each pixel (P) of the image (1) by means of the pixel values within a predefined area centered around the respective pixel (P) for which the structure tensor is determined, and wherein the pixel value of each pixel (P) of said image (1) is filtered by applying a filter (2, 2', 2") to the pixel value of each pixel (P), wherein said filter (2) assigns a filter value to each of said pixels (P), wherein determining the respective filter value involves determining an average of the pixel values of pixels of a first region (21) of said image (1), which first region (21) comprises or lies adjacent to the pixel (P) associated to the respective pixel value to which said filter (2, 2', 2") is applied, and wherein said first region (21, 25, 29) is oriented along the direction (D) of the eigenvector associated to the smaller eigenvalue of the two eigenvalues of the structure tensor associated to the pixel value to which said filter (2, 2', 2") is applied. Further, the invention is related to a corresponding computer program.

Figure 1

**EP 2 827 298 A1**

**Description**

The present invention relates to a method and computer program for filtering and particularly segmenting and/or analyzing anatomic structures in e.g. digital images.

Imaging applications are one of the most important diagnostic tools in today's medicine as the analysis of such images provides important parameters and values which can be used for further treatment of the patient.

Especially the topographic, anatomic, and functional structures of e.g. organs, vessel systems etc. are used for diagnosis based on changes over time or deviations from healthy vessels systems (e.g. blood vessels).

Endomicroscopic imaging has become an established tool in gastrointestinal endoscopy and allows for visualization of microscopic alterations of the mucosa during an ongoing endoscopic examination in order to improve diagnosis and to guide therapy. The representation of mucosal vascularization has attracted substantial interest as it contributes to the pathogenesis of different diseases, such as gastrointestinal cancer and chronic inflammation.

While the majority of segmentation methods concentrate on retinal images with reasonable high resolutions and good contrast, only a few approaches exist for comparably noisy Confocal Laser Endomicroscopy (CLE) images at low resolution.

It is known (cf. Ref. [3]), that pixels from retinal images are identified as ridges to get an approximation of the vessel centerlines.

It is also known that the output of adaptive local thresholding can be classified using so called support vector machines (cf. Ref. [4]).

It is furthermore known that the local geometric structure around vessel pixels is measured by evaluating the corresponding structure tensor (cf. Ref. [5]).

Another known method (cf. Ref. [2]) identifies endpoints of vessels and measures their geodesic distance in order to find optimal connecting paths.

However, the images obtained by CLE imaging are inherently corrupted by noise, blur, low contrast, and other types of disruptions.

Therefore, CLE images are traditionally evaluated manually, which is very time-consuming and prone to errors.

Hence, the problem underlying the present invention is to provide a robust and reliable method and a computer program allowing for a preferably automatic or at least semi-automatic processing of images, particularly comprising comparably low signal to noise ratios.

Such a method shall be capable of filtering, and particularly segmenting and/or analyzing anatomic structures, particularly blood vessels, in a digital image, particularly CLE images, comprising pixels, wherein a pixel value is associated to each pixel. Preferably, the amount of user interaction shall be minimized to a few comparably simple tasks.

This problem is solved by a method and a computer program having the features of claim 1 and 15, respectively. Preferred embodiments are stated in the corresponding sub claims.

According to claim 1, said method comprises the steps of:

-    automatically determining the structure tensor and the direction of the eigenvector of the structure tensor associated to the smallest eigenvalue of the at least two eigenvalues of the structure tensor for each pixel of the image using the pixel values within a predefined area centered around the respective pixel for which the structure tensor is determined, and

-    automatically filtering the pixel value of each pixel of said image by applying a filter to the pixel value of each of said pixels, wherein said filter assigns a filter value to each of said pixels, wherein determining the respective filter value involves determining an average of the pixel values of the pixels of a first region of said image, which first region comprises the pixel associated to the pixel value to which said filter is applied or which first region lies adjacent to the pixel associated to the pixel value to which said filter is applied, and wherein said first region is aligned with said direction of said eigenvector belonging to the pixel associated to the respective pixel value to which said filter is applied.

Preferably, a pixel is part of a certain region (e.g. the first region and/or the second region, see below) when at least a portion of the pixel lies inside said region.

In case a pixel lies not completely within a certain region (e.g. the first region or the second region, see below) it may be weighted by a factor smaller than 1 when calculating said average, wherein the weight may correspond to the fraction of the pixel that lies inside the respective (first or second) region over which the average is determined.

Preferably, according to the invention, an average is calculated using the arithmetic mean, i.e. an average of pixel values of a region is determined by e.g. adding the pixel values of said region (wherein a pixel value may be weighted by a factor smaller than one, see above) and dividing the sum by the number of pixels.

The well-known structure tensor $S_w(p)$ for a pixel p (e.g. a tupel (x,y)) applied to a digital image can be written e.g. as:

$$S_w(\mathrm{p}) = \sum_{\mathrm{r}} w(\mathrm{r})\, S_0(\mathrm{p} - \mathrm{r}),$$

wherein r represents pixels of the image *I*, e.g. labeled with a coordinate, such as e.g. a tupel (x,y), and wherein w describes said area of pixels that are taken into account for determining the structure tensor $S_w(p)$, and wherein $S_0(p)$ is given by:

$$S_0(\mathrm{p}) = \begin{bmatrix} [I_x(\mathrm{p})]^2 & I_x(\mathrm{p})I_y(\mathrm{p}) \\ I_x(\mathrm{p})I_y(\mathrm{p}) & [I_y(\mathrm{p})]^2 \end{bmatrix}$$

wherein I is a discrete set of samples $I(p)$ and the values $I_x(p)$ and $I_y(p)$ are the partial derivates at pixel p. From the structure tensor for each pixel, a positive definite pair of eigenvalues with corresponding eigenvectors can be calculated for each pixel. Particularly, in the 3D case, three eigenvalues are calculated and correspondingly three eigenvectors. When there is rotational symmetry of the window w or a constant image, the two eigenvalues are equal.

The eigenvector corresponding to the larger eigenvalue of the eigenvalues is oriented orthogonal to a vessel structure in the image, while the eigenvector corresponding to the smaller eigenvalue points along the local longitudinal extension direction of the vessel structure.

In a variant of the invention, the direction of said eigenvector belonging to the smallest eigenvalue is determined by determining the eigenvector belonging to the larger eigenvalue and then calculating a direction (e.g. vector) that is orthogonal to this eigenvector of the larger eigenvalue. This is advantageous since the eigenvector of the larger eigenvalue can often be determined more robust. Hence, also the eigenvector related to the larger eigenvalue may be used for orienting the first region and/or the second region (see below).

According to a preferred embodiment of the present invention, determining the respective filter value also involves determining an average of the pixel values of pixels of a second region, which second region surrounds the first region and/or lies adjacent to the first region, wherein the respective filter value is equal to or proportional to the difference of the average of the pixel values of the pixels of the first region and the average of the pixel values of the pixels of the second region.

In case of a filter according to the invention, which is herein also denoted as oriented Differences of Boxes (o-DoB) filter, the first region preferably is a rectangular region (i.e. a region delimited by a rectangular boundary), wherein the pixel associated to the pixel value to which said filter is applied is preferably arranged in the center of said first region. Said first region further preferably comprises a bisector forming an (e.g. longitudinal) axis of the first region which runs parallel to said direction of said eigenvector belonging to the smallest eigenvalue. Particularly, said bisector or (longitudinal) axis is a symmetry axis that divides the rectangular first region in two identical halves. Particularly, said first region comprises a longer side running parallel to said bisector/longitudinal axis as well as a shorter side running across said bisector/longitudinal axis (i.e. the bisector/longitudinal axis forms a perpendicular bisector with respect to the shorter side).

Further, regarding said O-DoB filter, the outer second region is centered with respect to the pixel associated to the respective pixel value to which said filter is applied (i.e. said pixel forms the center of the second region although it is not a part of the second region), and wherein particularly said second region comprises an outer boundary delimiting said second region, which outer boundary forms a rectangle, particularly a square. Particularly, an inner boundary of the second region is formed by the outer boundary of the first region, i.e., the first region does not belong to the second region. Particularly, the second region may thus surround the first region.

In other words, according to the invention, a DoB filter is aligned with the local structure tensor, which turns the DoB filter into a non-linear filter, i.e., the Oriented DoB-filter. Advantageously, this oriented filter realizes a complex bandpass filter favoring a certain direction and simultaneously suppressing its orthogonal counterpart. Following this idea, vessel structures will be smoothed along the local gradient direction and thus emphasized.

According to a variant of the filter according to the invention, merely an average over said first rectangular region may be performed, i.e., the average pixel value of the pixel values of the pixels of the first region is equal to or proportional to the respective filter value. This oriented filter is a smearing filter which averages along a vessel portion.

According to a further variant of the oriented filter according to the invention, the filter may be designed to emphasize edges. Then, the first region preferably is a semicircular first region delimited by an arc-shaped boundary section and a straight (i.e. linear) boundary section (the diameter), wherein particularly the pixel associated to the pixel value to which said filter is applied is arranged in the center of or adjacent to the center of said straight boundary section of the semicircular first region (or of the semicircular second region, see below), and wherein particularly the second region is a semicircular second region also delimited by an arc-shaped boundary section and a straight boundary section, which straight boundary section is arranged adjacent to or coincides with the straight boundary section of the first region so that the first and the second region form a circular region (i.e. the two regions comprise the same radius), wherein the two semicircular regions are oriented such that said direction of said eigenvector runs parallel to said straight boundary section of the first and/or second region and points from e.g. said pixel associated to the pixel value to which said (edge) filter is applied (e.g. from the center of said circular region) along said straight boundary section(s). Also here, the eigenvector belonging to the larger eigenvalue of the structure tensor may be used for determining the direction of the eigenvector related to the smallest eigenvalue since these two eigenvectors are orthogonal with respect to each other. Further, also the eigenvector related to the larger eigenvalue may be used for orienting said regions.

The predefined area of pixels for calculating the structure tensor extends particularly with an odd number of 5 pixels to 13 pixels in each direction, describing a square. Particularly, an area of 5x5 pixels, 7x7 pixels, 9x9 pixels, 11x11 or 13x13 pixels is chosen for determining the structure tensor for the respective pixel. The size of the area particularly depends on the magnification of the underlying system that was used to record the anatomic structure.

Furthermore, it has to be noted that a pixel value is particularly a scalar value. However it is explicitly mentioned that also pixel values comprising a tupel of values (such as e.g. for the RGB representation of a digital image) can be processed with the method according to the present invention, e.g., by processing each tupel entry of a pixel separately. Thus, the present invention does not relate to gray-valued images only.

One advantage of the (O-DoB) filters according to the invention is that these filters are particularly more sensitive to the direction of the underlying structure as for example an un-oriented filter, such as e.g. Difference of Gaussians (DoG) or Laplace of Gaussian (LoG) filters. Thus, said filters tends to yield better results for detecting e.g. vessels or edges within an image. Furthermore, the computational costs for determining a filtered image using a filter according to the invention are comparably low, as for example compared to DoG filters, which are conventionally convolved with the whole image with the convolution being a comparably cost intensive computational procedure.

In order to reduce the computational costs further, a set of differently oriented (e.g. O-DoB) filters can be calculated before or while applying the method according to the invention. Said pre-calculated filters can then be stored in a look-up table. The range of orientations of such pre-calculated (e.g. O-DoB) filters particularly covers 0°-180°, particularly in steps of 1°. However, it is also possible to choose other step sizes.

The dimensions of the second (outer) region lie particularly in the range of 3x3 pixels up to 13x13 pixels. Generally, the second region is preferably a square from which said first region is taken away, which particularly remains un-oriented (always oriented in the same direction regardless of the direction of said eigenvector of the structure tensor). The first rectangular region (also denoted as first rectangle) preferably has a shorter side and a longer side (compared to the shorter side) which shorter side preferably extends over an e.g. small odd number of pixels, e.g. 1 pixel to 5 pixels (in case of larger vessels the extension is preferably larger than 1 pixel to account for the diameter of the vessel), wherein the longer side of the first rectangular region has a length, which lies particularly between a (particularly longest) side length of the second region and the length of a diagonal of the second region, which diagonal crosses the first region. Thus, it is particularly possible that the first region is not fully surrounded by the second region for certain orientations. Preferably, all (outer) side lengths of the first and second region comprise an odd number of pixels so that the regions comprise a single pixel as a center, which pixel does not form part of the second region.

Furthermore, discretization effects are preferably taken into account. Discretization effects originate from the fact that an image contains pixels as the smallest undividable entities. Considering a rectangle that is oriented e.g. at 45° with respect to the arrangement of the pixels, the sides of such an oriented rectangle in terms of pixels will have a rippled (sawtooth-like) contour. That is due to the fact that a pixel has a certain finite dimension. Thus, a pixel arranged along the sides of said second rectangle will be associated with a corresponding weight, which will account and compensate for said rippled contour, i.e. for the portion that lies within the respective region. Said weight is particularly taken into account when averaging the pixel values associated to the pixels in said first and second regions/rectangles (both regions might suffer from discretization effects). A pixel value will be multiplied with the weight of the associated pixel and thus the pixel value can be corrected for the discretization effect. The weight may be 1 in case the respective pixel lies completely inside the respective region. The weight of a pixel when averaging the pixel values of the pixels may further correspond to the fraction of the pixel that lies within the respective region over which the average pixel value is determined. In general, it is particularly advantageous to assign a weight to each pixel, which is particularly convenient for programming purposes. Pixels which do not need to be weighted will then have an associated weight of 1.

In a preferred embodiment of the present invention, said image is filtered by a plurality of O-DoB filters, wherein each of said filters assigns to each of said pixels of the image a filter value, wherein particularly three O-DoB filters are applied to the pixel value of each pixel assigning three filter values to each pixel of the image.

Particularly, the size of said two regions influence the sensitivity/response of the filter to the anatomic structures in said image. The response is particularly high, when the size of the first rectangular region is of the size of the diameter (measured in pixels of the image) of the anatomic structure, e.g. vessel, and when the size of the second region is chosen such that the second region does not contain neighboring anatomic structures, e.g. vessels. Thus, the size of said regions is ideally chosen correspondingly. In case several O-DoB filters are applied, the lengths of the shorter sides of the first rectangular regions may then be chosen such that they correspond to the prominent vessel diameters, for instance.

In a further preferred embodiment of the invention, before filtering said image, configuration data associated to said image is generated comprising image-related information, particularly at least one of: the scale of said image, expected diameters of the anatomic structures recorded in said image, length of sides of the first and second region of said at least one filter or said plurality of filters for filtering said image. The scale of the image is particularly given by a value characterizing which length, e.g. how many micrometer (or millimeter, nanometer etc.), corresponds to one pixel. The expected diameters of the anatomic structure are particularly provided by user input. By selecting particularly three different, generic anatomic structure diameters within the image, particularly three O-DoB filters are generated, each of said filters being ideally responsive for structures, e.g. vessels, having said selected diameters.

In a preferred embodiment of the invention, after filtering the image, a best-filter value for each pixel of the image is determined for segmenting the image, wherein said best-filter value is particularly the highest absolute-filter value associated to each pixel of said image returned from said at least one filter or said plurality of filters, and wherein pixels having best-filter values exceeding a pre-definable threshold value are identified, and wherein the entirety of identified pixels form the foreground regions of a particularly binary, particularly foreground segmented image, and wherein particularly segmenting of the image is conducted by applying a seeded region growing method (cf. Ref. [8]) to best-filter values of the image, wherein said seeded region growing method starts with at least one pixel associated to a best-filter value above a threshold value and particularly grows along pixels having a pixel value that exceeds a certain threshold value, wherein said threshold value might be variable and not fixed for the whole image.

Segmentation describes the process of partitioning a digital image into multiple segments. In many such applications the segmented image is partitioned into a foreground and a background region. Thus, said resulting segmented image is particularly a binary image, wherein the foreground is particularly represented by pixels of pixel value 1 and the background is represented particularly by pixels having the pixel value 0. The present invention particularly treats said anatomic structures to be identified as foreground and everything else as background. However, other values may also be assigned.

In a further preferred embodiment of the present invention, after estimating the segmented image, said segmented image is skeletonized, wherein a path or line-like object located in the center of the contour of said foreground regions is determined, wherein particularly all pixels comprised by said path are vertices of said path, wherein said path is particularly a morphological or topological skeleton of said foreground regions of said segmented image, wherein said morphological skeleton is particularly obtained by shrinking the contour of said foreground regions to a set of structure- and topology-representing pixels arranged on a line. Furthermore, particularly the distances of the path to the contour are determined along at least parts of said path for determining the diameter of the anatomic structure.

In a further preferred embodiment of the invention, after or while estimating said path and said vertices corresponding to said path, a weight function is assigned to every edge connecting any two vertices comprised in said path, wherein the respective weight function value is particularly proportional or equal to the Euclidean distance between said any two vertices. It is noted that assigning a weight function does not necessarily imply that said weight function is evaluated for all edges.

In another preferred embodiment of the invention, after estimating said path and said vertices comprised in said path, a minimum spanning tree [MST] of edges connecting said vertices is determined, wherein said minimum spanning tree connects all vertices comprised in said path, and wherein said minimum spanning tree has a combined weight that is the sum of all weight function values of edges of said minimum spanning tree, and wherein said combined weight is particularly less than or equal to the weight of any other subset of edges connecting all of said vertices comprised in said path. Further, in a minimum spanning tree any two vertices are connected by a simple path, wherein a simple path comprises no repeated vertices, i.e. does not connect the same vertex twice by describing a cycle of edges (cf. also Ref. [6]).

In a further preferred embodiment of the invention, after estimating said minimum spanning tree connecting all vertices, edges exceeding a predefined weight function value, are removed from said minimum spanning tree, wherein the minimum spanning tree is either not split or split into a plurality of disjunct minimum spanning trees forming a minimum spanning forest.

In another preferred embodiment after removing edges exceeding said predefined weight function value, each of said at least one minimum spanning trees is approximated by a polygonal path, particularly by means of a split and merge method. Said split and merge method is particularly carried out on particularly all branches of the tree. A branch of a tree has a start vertex, which contains three edges originating from or arriving at said start vertex, and an end vertex which has only one or three edges associated to it. The start and end vertex are connected either directly by one common edge of the start and end vertex or by a sequence of edges and vertices, wherein any vertex of said sequence has only two edges associated to it. Exceptions are particularly a degenerate tree, i.e. a tree comprising only one branch and therefore said start vertex has only one edge.

A split and merge method (cf. Ref. [7]) may comprise the following steps. Each of said at least one minimum spanning trees is approximated by a polygonal path connecting a subset of vertices of all vertices comprised in said at least one minimum spanning tree, wherein said polygonal path comprises line segments, each connecting two vertices of particularly a branch of said at least one minimum spanning tree, and wherein the maximum (particularly Euclidean) distance between each line segment and the corresponding sequence of edges connecting said respective two vertices is smaller than a predefined value, and wherein any two adjacent line segments connecting two vertices are replaced by one line segment connecting said two vertices, if the resulting one line segment has maximum (particularly Euclidean) distance from the corresponding sequence of edges connecting said two vertices that is smaller than said predefined value. Said line segments are particularly straight lines.

In another preferred embodiment a set of parameters associated to the image is determined, said set of parameters comprising at least one of: the length of the polygonal path, the number of vertices directly connected to more than two vertices being the origin of more than two line segments, i.e. branching points of the minimum spanning tree, the number of pixels of the foreground regions, the number of pixels of the segmented image (total area), the fractal dimension of the segmented image, or the lacunarity (e.g. a measure for clustering) of the segmented image.

In another preferred embodiment of the invention, after estimating said set of parameters associated to the image, said method is applied to another image of an anatomic structure, wherein said other image comprises pixels, wherein a pixel value is associated to each pixel and the determined parameters from said other image are compared to the parameters associated to the image previously processed. particularly by comparing the distribution of parameters associated to the first and the other image, particularly by calculating an earth movers distance between said distributions. It has to be mentioned that particularly configuration data associated to said image might not be generated from anew for the other image but might be taken from the previously processed image.

In an especially preferred embodiment of the present invention, the image is a region of interest comprised in a larger image or an image of an image stack or image stream. Said region particularly is a region of interest as selectable by a user input.

In another preferred embodiment of the invention, after segmenting said image and before estimating said path, a first and a second pixel forming end points of an anatomic structure that could not be segmented automatically are selected by a user, wherein a missed structure between said end points is segmented by means of a Dijkstra method (cf. Ref. [6]). For this, a plurality of pixels for said two pixels may be considered, wherein said plurality of pixels form a pixel-wise connection between said two pixels, and wherein a cost is associated to each pixel of said plurality of pixels, and wherein said plurality of pixels is chosen such that the sum of the costs associated to said plurality of pixels is smaller than or equal to a sum of the costs of any other plurality of pixels forming a pixel-wise connection between said two pixels. The cost of a pixel is thereby preferably determined from the associated best-filter value, preferably by inverting said best-filter values and linearly scaling the inverted best-filter values thereafter. For instance, in the case of a grey scale image having 256 levels of grey the best-filter values are multiplied by minus one and then 256 is added, respectively, for inversion of the best-filter values. The inverted best-filter values are then scaled linearly such that the smallest one has a value 0. E.g., if the inverted best-filter values lie within the range 100 to 150, the scaled inverted best-filter values forming said cost function lie in the range from 0 to 50 (i.e. the constant 100 is subtracted). In this way, one prevents that the algorithm leaves the proper path on e.g. a vessel or another anatomic structure.

Furthermore, the problem underlying the present invention is solved by a computer program having the features of claim 15. Said computer program comprises program code for conducting the method according to the present invention when executed on a computer.

Further features and advantages of the invention shall be described by means of detailed descriptions of embodiments of the present invention with reference to the Figures, wherein

Fig. 1    shows a flow diagram of the method and computer program according to the invention;

Fig. 2    shows a generic image from a CLE displaying an anatomic structure;

Fig. 3    shows the image intensity-coded by the gradient orientations (direction of the eigenvector of the structure tensor associated to the larger eigenvalue);

Fig. 4    shows the image when filtered with three O-DoB filters of different size, displayed are the filter values of the respective O-DoB filter;

Fig. 5    shows the image with the segmented foreground regions overlaid;

Fig. 6      shows the image with the morphological skeleton overlaid, as a path

Fig. 7      shows the image with said path being approximated by a split and merge method for approximating the path;

Fig. 8      exemplary images of an endoscopic retrograde cholangiopancreatography (ERCP);

Fig. 9      exemplary images of a coronary angiography;

Fig. 10     exemplary images of an ophthamology;

Fig. 11     exemplary images of a sinusoidal microcirculation in the liver;

Fig. 12     exemplary images of a chicken egg test;

Fig. 13     schematic image of vertices and edges and a minimum spanning tree;

Fig. 14     shows an O-DoB-Filter according to the invention;

Fig. 15     shows a filter for detecting edges;

Fig. 16     shows a filter for averaging;

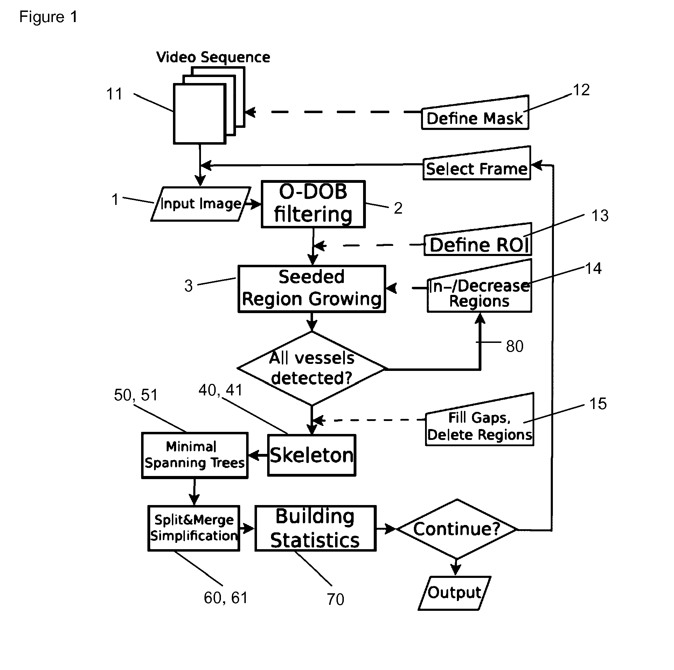

Figure 1 shows a flow diagram of the method and/or computer program according to the invention. The method/computer program can be partitioned into three parts. A first part is a configuration mode, the second part is a filtering/segmentation mode and the third part is an analysis mode.

Initially, a sequence of images 11 or a single image 1 is provided. In the configuration mode configuration data is generated, particularly in form of a configuration file, readable by said computer program. Said configuration data containing information such as size of the anatomic structure, an image mask 12 (i.e. a region within said image, that should be processed), contrast mode of the image (i.e. is the anatomic structure associated to low or high pixel values), name of the project, place for saving said particular configuration data, scale of image, e.g. micron per pixel, selection of typical diameters of the anatomic structure, user remarks regarding the image(s) etc. The sequence of images 11 or said image 1 can be displayed in a media player for first inspection by the user.

Following the generation of the configuration data, said sequence of images 11 or said single image 1 are transferred to the segmentation mode. Here particularly a region of interest can be selected where analysis should take place.

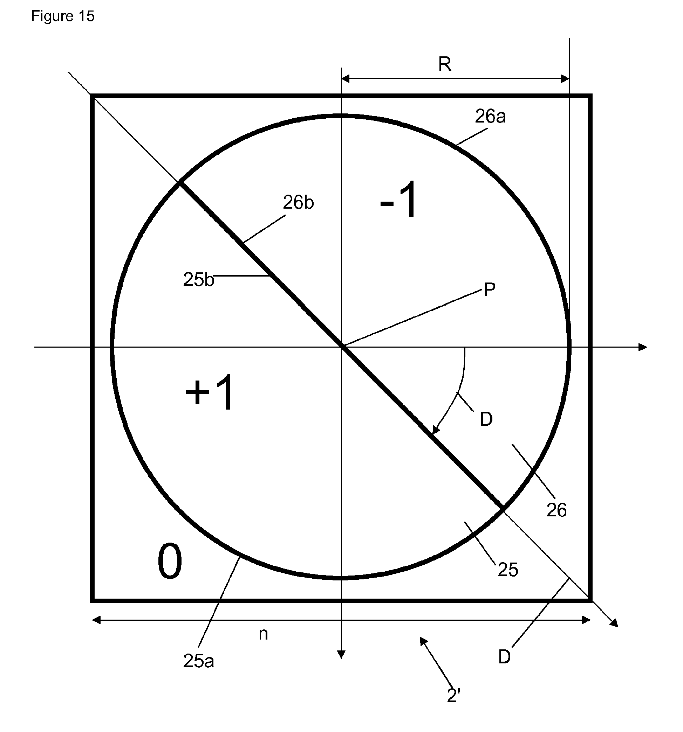

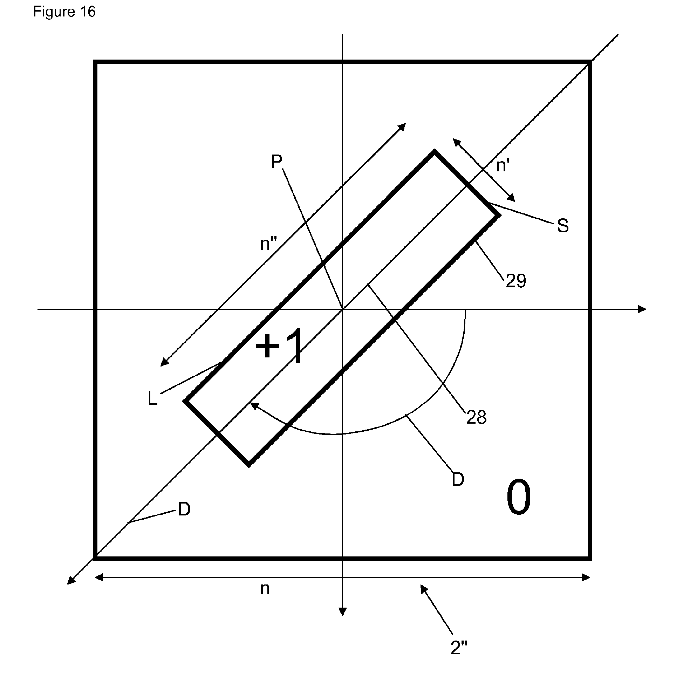

Since said image 1 shows a high amount of noise and is corrupted by blur, preprocessing by non-linear bandpass filtering is mandatory before segmenting vessel / anatomic structure candidates. Therefore, Oriented Differences of Boxes (O-DoB) filters 2 according to the invention are applied to the image 1 for further processing of the image 1, e.g. for segmentation 3 of prospective vessel structures. Said O-DoB filters 2 have the capability to suppress noise in non-vessel regions and simultaneously emphasize the vessel structures. Other filters, as shown in Fig. 15 and 16, may also be applied.

Prior knowledge about the target structure is incorporated by choosing appropriate values for the parameters for the sizes of the regions 21, 22 comprised by said O-DoB filter(s) 2. Said parameters are particularly determined in the configuration mode.

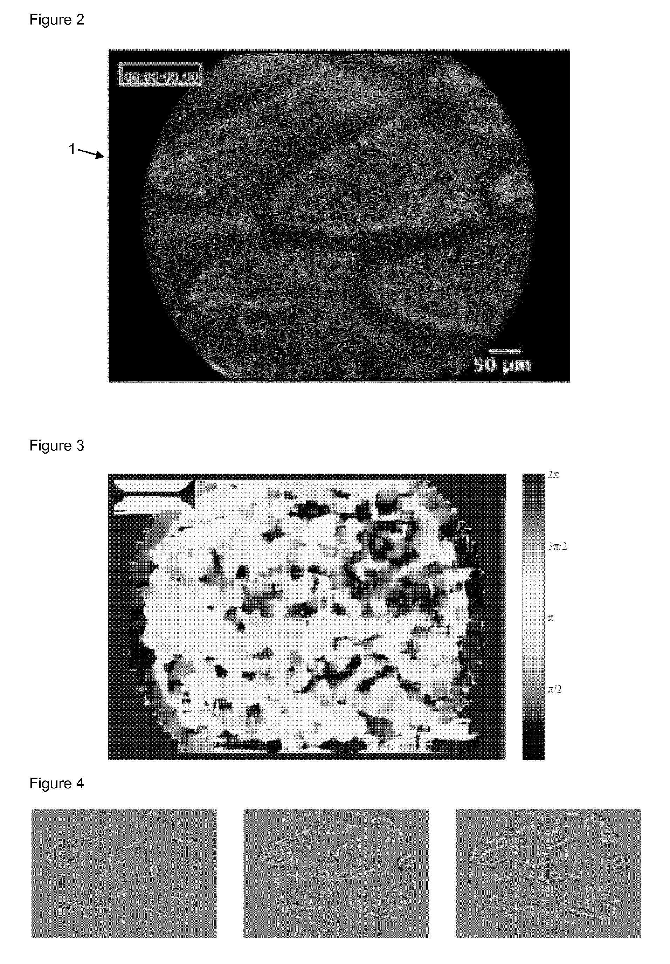

To generate an O-DoB filter 2 a conventional (un-oriented) DoB filter is modified to align with the local structure tensor (more precisely: to align with the eigenvector corresponding to the smaller eigenvalue of the structure tensor; cf. Fig. 3) which turns it into a non-linear filter being called the Oriented Differences of Boxes (O-DoB) filter 2. This filter 2 will smooth vessel structures along the local gradient direction and thus emphasize said vessel structures by approximating the local derivatives (cf. Fig. 4).

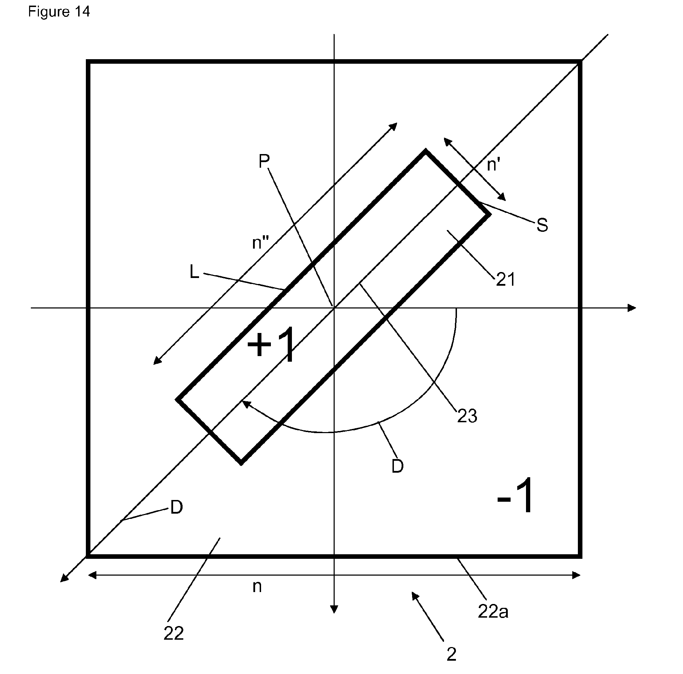

Fig. 14 shows a filter mask for such an O-DoB filter 2. Indicated are the outer second region 22 of pixel size nxn (n odd) delimited by an outer rectangular boundary 22a, the first rectangular region 21 of size n'xn", where n' is the length of the shorter side S of the first rectangular region 21, which length n' is smaller than the length n" of the longer side L of the first rectangular region 21 (n' and n" are an odd number of pixels). The second region 22 surrounds the first region 21 and is thus also delimited by the boundary of the first region 21 which does not form part of the second region 22. The first region 21 comprises a bisector 23 (i.e. a longitudinal axis of the first region 21) which runs parallel to the direction D of the eigenvector associated to the smallest eigenvalue of the two eigenvalues of the structure tensor associated to the pixel P whose pixel value is filtered by the shown filter 2. The direction D may also be stated in terms of an angle D. Said pixel P is arranged in the center of the first region 21. The second region 22 is also centered with respect to said pixel P.

It is to be noted that Fig. 14 shows the O-DoB filter 2 in the limit of very large sizes n, n', and n" (typical sizes are stated above), where the pixels are either part of the respective region 21, 22 or outside the respective region 21, 22. For smaller sizes a portion of a pixel may be for instance inside the first region 21 while the other portion is outside the first region 21 and lies in the second region 22. When averaging the pixel values of the pixels of the first region 21 (as described below) such pixels are weighted, wherein the weight may correspond to the fraction of the pixel that lies inside the first region 21. Such a weighting may also be used when averaging over the second region 22. Further, these weighting techniques may also be employed for the other filters 2', 2" shown in Figs. 15 and 16.

The filter 2 according to Fig. 14 carries an (e.g. multiplication factor of) +1 for each pixel value of the pixels of the image 1 in the first region 21 and an (e.g. multiplication factor of) -1 for the pixel values of the pixels of the image 1 in the surrounding second region 22.

Correspondingly, the filter value assigned to pixel P in the center of the first region 21 corresponds to (or is proportional to) the average pixel value of the first region 21 minus the average pixel value of the second region 22. In the same manner, the filter 2 is applied to the other pixels of the image/region of interest 1.

Further, Fig. 15 and 16 show further oriented filters 2', 2" which may also be used for bringing out structures of the image/region of interest 1 to be analyzed. Here, the direction D is the direction of the eigenvector described above with respect to Fig. 14.

Fig. 15 shows a filter 2' for finding edges. Here, the first region 25 is a semicircular first region 25 having a radius R which is arranged adjacent to a semicircular second region 26 (also having radius R), wherein each region 25, 26 is delimited by a semicircular boundary section 25a, 26a as well as by a straight boundary section 25b, 26b so that the two regions 25, 26 form a circular region. The individual pixel P associated to the pixel value to which the filter 2' is applied is ideally arranged in the center of the straight boundary section 25a, 26a of the first or the second region 25, 26 (e.g. in the center of the circular region formed by the semicircular regions 25, 26).

However, for smaller sizes of the filter 2', due to the mentions discretization effects, the pixel P may be actually arranged in the first or in the second region 25, 26.

Again, the filter 2' carries a +1 for the pixel values of the pixels of the image 1 in the first region 25, while it carries a -1 for the pixel values of the pixels of the image 1 in the second region 26. Said direction D, which may also be stated in terms of an angle D, points from said center of said circular region 25, 26 (i.e. the pixel P) along the straight boundary sections 25b, 26b.

Correspondingly, filter 2' assigns a filter value to pixel P which corresponds to or is proportional to the difference between the average of the pixel values of the pixels of the first region 25 minus the average of the pixel values of the pixels of the second region 26. The outer region surrounding the circular region 25, 26 merely carries zeros and does not contribute to the filter value.

Finally, Fig. 16 is a filter 2" by means of which an average along a vessel structure may be performed. Here, an average is merely performed over the pixel values in the rectangular first region 29 (carrying +1), which is defined as in Fig. 14 and extends along the bisector/longitudinal axis 28 aligned with said direction D, which is also defined as in Fig. 14. The filter value assigned to pixel P in the center of first region 29 corresponds to or is proportional to said average over the first region 29. The outer region carries zeros and does not contribute to the filter value. Concerning Figs. 14 to 16 said average pixel values are calculated using the arithmetic mean of the pixel values of the respective regions 21, 22, 25, 26, 29.

In a next step the image 1 is then processed by the method and/or computer program according to the invention. Said image 1 can be selected by user input. Said image 1 is then processed by means of estimating eigenvectors and eigenvalues of the structure tensor of said image 1 followed by a filtering with particular three of said O-DoB filters 2. Said O-DoB filters 2 are particularly pre-calculated according to the selection of the typical diameters and stored in a look-up table. Wherein the precalculation refers to a set of different orientations, so that it is not necessary to calculate each O-DoB filter for each pixel anew, but instead each O-Dob filter might be looked-up from the look-up table. The O-DoB filtered images show enhanced structures with more homogeneous intensities (cf. Fig. 4).

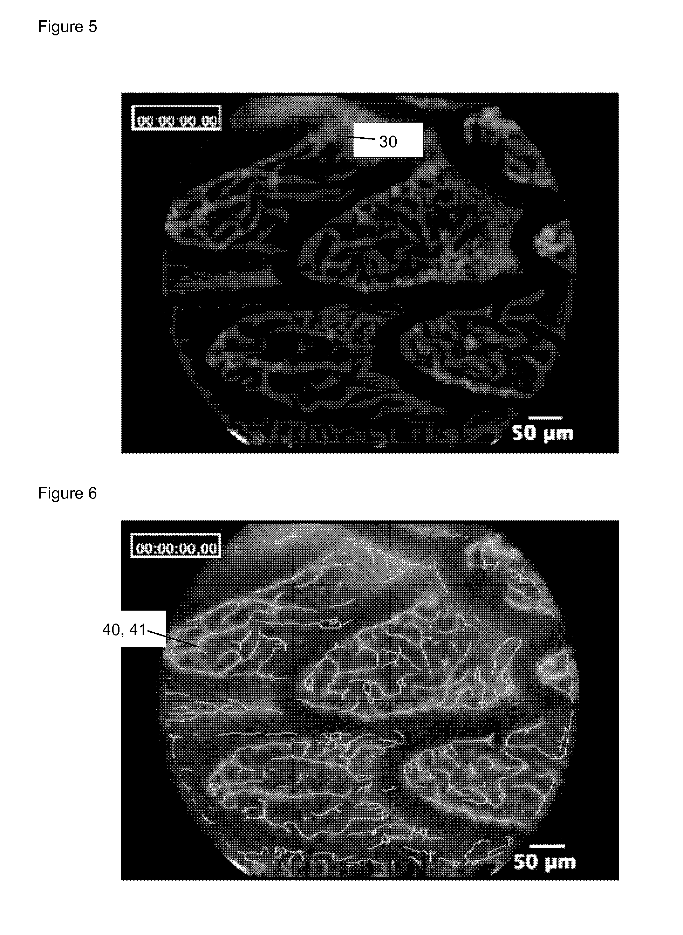

In order to detect connected areas within the vessels, a parameter-free Seeded Region Growing (SRG) (cf. Ref. [1]) method 3 is applied to said image. Said SRG 3 does not require predefined homogeneity criteria and thresholds. The SRG method 3 returns a binary foreground-vs.-background segmentation of the O-DoB filtered image (cf. Fig 5). The foreground is associated to the anatomic structure /vessels within the image. While local maxima of the O-DoB filter 2 outputs are directly used as initial seeds for the SRG 3 method, no new seeds are created while expanding the regions. Prior to this step, the user is able to determine a free-form Region of Interest (ROI) 13 in order to exclude bogus regions that should be disregarded in further processing / analysis.

Furthermore the user has the possibility to adjust the amount of objects 14 regarded as foreground. Finally, the user is able to delete 15 wrongly-assigned foreground regions or to close non-assigned foreground region gaps between segmented areas.

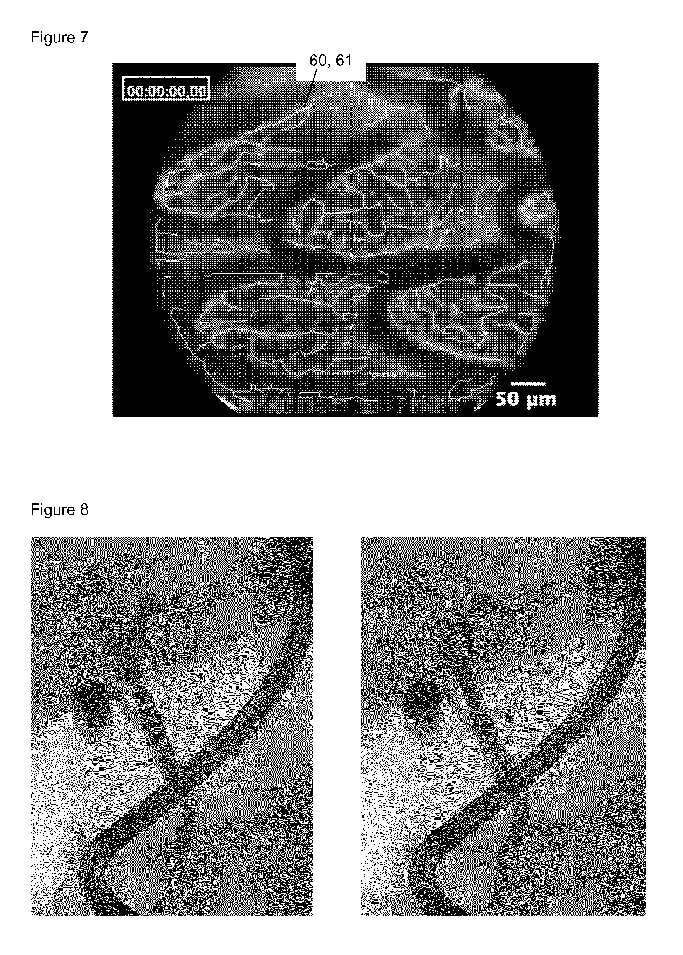

After segmenting the image, the morphological skeleton 41 from the foreground region is determined. Such skeleton 41 already provides initial approximations of the vessel axes (cf Fig. 6). These skeletons 41 are obtained by morphological closing operations iteratively repeated as long as not more than the middle line of an object remains. By computing these skeletons 41, the still unrelated foreground pixels are augmented by a neighbourhood structure. Since vessels can split into parts, i.e. one vessel might fork into several sub-vessels, hierarchical relations can be obtained in an optimal way by concepts taken from graph theory. For this reason the skeleton 41 points are transformed into weighted graph trees G = (E;V;w) of edges E and directed vertices V with associated weights w. These graphs are further decomposed into a forest of Minimum Spanning Trees (MST) 50, 51. In order to remove degenerated trees and to reduce the number of branches along the vessels, the MSTs 50, 51 are further simplified in a Split-and-Merge 60, 61 way. Using these tree branches, the final vessel boundaries are obtained for each pixel located at the vessel axes (cf. Fig. 7). As a further chance for feedback, the user is allowed to manually select vessel endpoints in order to include missed structures. An optimal path through the graph is obtained by applying Dijkstra's algorithm employing a cost function based on locally enhanced O-DoB filter outputs.

Given the simplified MSTs 60, 61, it is possible to derive a couple of statistics 70. Particularly the distribution of vessel diameters within the examined region can be extracted.

A histogram obtained for said image displays the frequency per identified vessel diameter. In order to compare or match histograms obtained from different images of a sequence of images or to monitor changes over time in delayed recordings, the intra and inter class distances can be calculated as well as the Earth Mover's Distance (EMD) of extracted vessel diameter histograms. These provide a very robust similarity measure. Beyond this histogram, several other statistical or form-describing parameters are obtained, such as for example: Total vessel length, total vessel area, total area of the image / region of interest, mean and standard deviation of the vessel diameter, number of branches number of branching points, the fractal dimension of the vessel structure as well as the lacunarity.

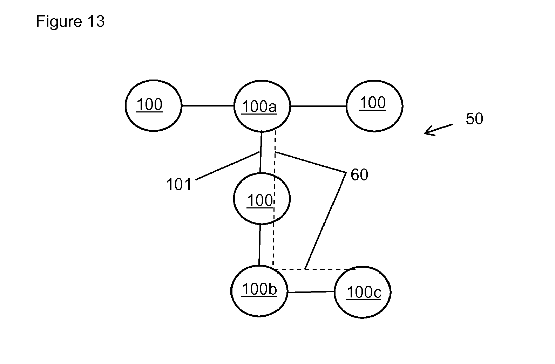

Figure 13 shows a schematic image of vertices 100, 100a, 100b, 100c which are connected by edges 101. The polygonal path 60 is connecting the vertices 100a and 100c via vertex 100b.The entirety of edges and vertices shown form a minimum spanning tree 50. The polygonal path 60 is drawn for a single branch extending from vertex 100a to vertex 100c. Each vertex 100, 100a, 100b, 100c is associated to a pixel in the image 1.

**Examples:**

The invention is particularly useful for quantitative analysis of the mucosal microvascularization. Confocal Laser Endoscopy (CLE) recordings demonstrate the applicability of said method. Pathological differences of the mucosal microvascularization can be measured quantitatively.

Endoscopic retrograde cholangiopancreatography (ERCP) (cf. Fig. 8)

In ERCP the Vatersche papilla is recorded while using contrast agent for x-ray recordings. This way a narrowing of the passages by e.g. tumors or gallstones can be detected. Such recordings can be evaluated and analysed with the present invention.

The pathological changes and the quantification of the gall- and pancreatic passage-complexity can be observed and quantified.

Left panel of Fig. 8: Segmentation. Right panel of Fig. 8: Quantitative structure survey of an ERCP examination

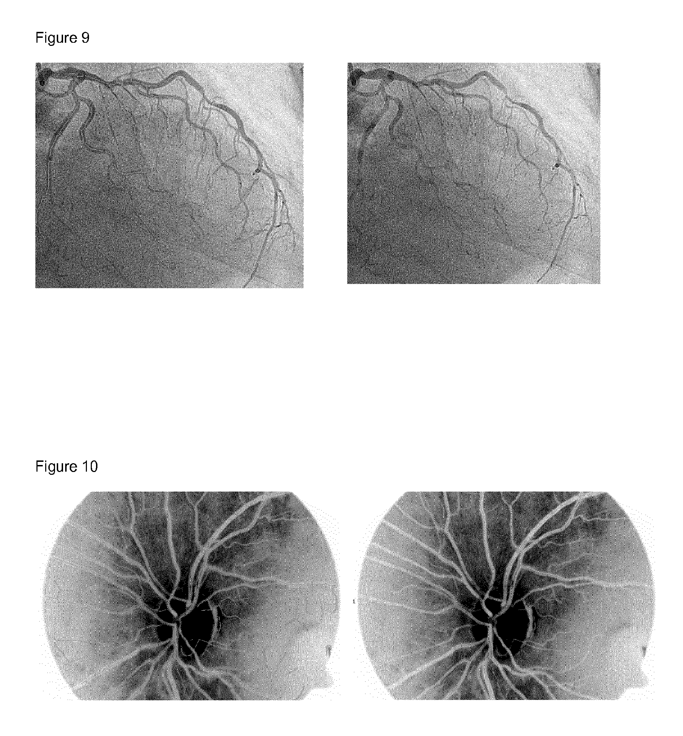

Coronary angiography - Stenosis Identification and Syntax-Score (cf. Fig 9)

Another and promising area is the quantification of Coronary angiography. Here, the method and computer program according to the invention are capable to detect pathological changes in the vessel structure complexity and support the detection of stenosis.

Left panel of Fig. 9: Segmentation. Right panel of Fig. 9: Quantitative structure survey of a coronary angiography of the RIVA medial and main stem.

Ophthamology (cf. Fig. 10)

When examining the retina, the eye background can be observed regarding pathological changes. Said observing can support an internistically or neurobiological diagnosis (Diabetes, Alzheimer). Also for retinal vessel analysis the method was successfully applied as it was capable to detect pathological vessel structure changes and to quantitatively analyse said changes.

Left panel of Fig. 10: Segmentation. Right panel of Fig. 10: Quantitative structure survey of a healthy retinal background.

EP 2 827 298 A1

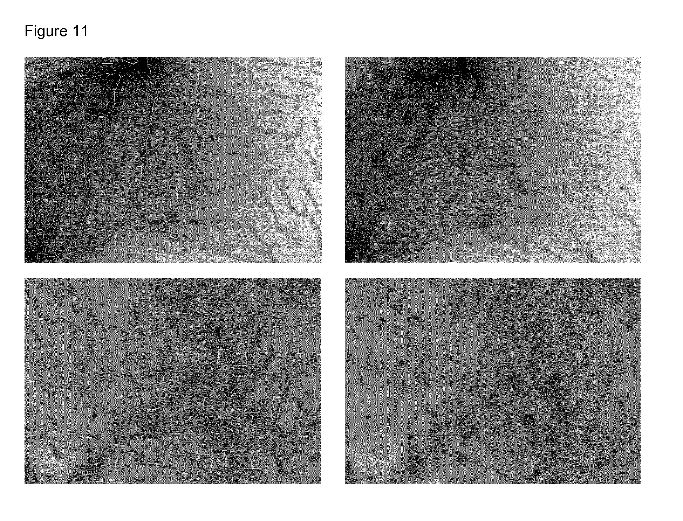

Sinusoidal microcirculation in the liver (cf. Fig. 11)

Also recordings from sinusoidal microcirculation in the liver using orthogonal-polarization-spectroscopy can be quantified with the present invention.

Especially in animal testings for hepatic ischemia and reperfusion changes of the microcirculation can be detected. Such a complexity analysis can furthermore provide additional information for evaluating the orthogonal-polarization-spectroscopy data regarding the hepatitis damage or healing.

The upper panels in Fig. 11 show a normal sinusoidal microcirculation. The lower panels of Fig. 11 show an ischemia of the sinusoidal microcirculation.

Left panels of Fig. 11: Segmentation. Right panels of Fig. 11: Quantitative structure survey

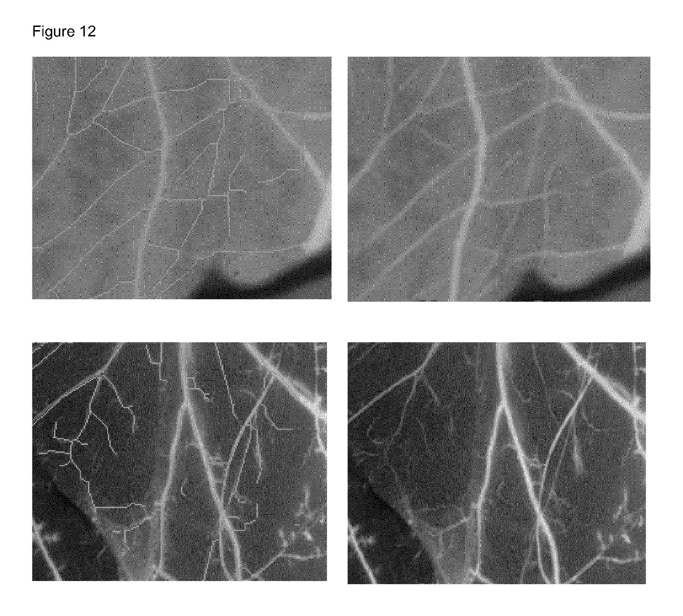

Chicken egg test at the Chorioallantoic membrane (HET-CAM, cf. Fig. 12)

A standard procedure for examinations of the eye / mucosa aggravation of chemicals (medical drugs, cosmetics) is the so called HET-CAM test. Here, the test substance is applied to the CAM and the reaction of the CAM (such as bleeding, changes of the blood vessels) is observed and evaluated visually. The method and computer program according to the invention can segment and quantify such changes in blood vessels / structure and is therefore a further development of the internationally renown HET-CAM test.

The upper panels in Fig. 12 show a healthy CAM. The lower panels of Fig. 12 show a damaged CAM.

Left panels of Fig. 12: Segmentation. Right panels of Fig. 12: Quantitative structure survey.

**References**

[1] R. Adams and L. Bischof. Seeded region growing. TPAMI, 16(6):641-647, 1994.

[2] Y. Rouchdy and L.D. Cohen. Retinal blood vessel segmentation using geodesic voting methods. In ISBI, pages 744-747, 2012.

[3] R. Socher, A. Barbu, and D. Comaniciu. A learning based hierarchical model for vessel segmentation. In ISBI, pages 1055-1058, 2008.

[4] L. Xu and S. Luo. A novel method for blood vessel detection from retinal images. BioMedical Engineering OnLine, 9(1):14, 2010.

[5] Y. Zheng, H. Wang, J. Wu, J. Gao, and J.C. Gee. Multiscale analysis revisited: Detection of drusen and vessel in digital retinal images. In ISBI, pages 689-692, 2011

[6] R. Sedgewick and K. Wayne , Algorithms, Pearson, 2011

[7] L. F. Costa and R. M. Cesar, Shape Analysis and Classification, CRC Press, 2001

[8] S.W. Zucker, Region Growing: childhood and adolescence. Computer Graphics Image Processing 5, 382-399 (1976)

**Claims**

1. Method for filtering an image, particularly for segmenting and/or analyzing anatomic structures in the image, wherein said image comprises pixels, wherein a pixel value is associated to each pixel, and wherein the method comprises the steps of:

   - determining the structure tensor and the direction (D) of the eigenvector of the structure tensor associated to the smallest eigenvalue of the two eigenvalues of the structure tensor for each pixel of the image (1) using the pixel values of pixels within a predefined area around the respective pixel (P) for which the structure tensor is determined, and
   - filtering the pixel value of each pixel (P) of said image (1) by applying a filter (2, 2', 2") to the respective pixel value, wherein said filter (2, 2', 2") assigns a filter value to each of said pixels (P), wherein determining the respective filter value involves determining an average of the pixel values of the pixels of a first region (21) of said image (1), which first region (21) comprises or lies adjacent to the pixel (P) associated to the respective pixel value to which said filter (2, 2', 2") is applied, and wherein said first region (21, 25, 29) is oriented along said direction (D) of said eigenvector associated to the pixel (P) that is associated to the respective pixel value to which said filter (2, 2', 2") is applied.

2. Method according to claim 1, **characterized in that** determining the respective filter value also involves determining an average of the pixel values of the pixels of a second region (22, 26), which second region (22, 26) surrounds the first region (21) and/or lies adjacent to the first region (21, 25), wherein the respective filter value is equal to or proportional to the difference between the average of the pixel values of the pixels of the first region (21, 25) and the average of the pixel values of the pixels of the second region (22, 26).

3. Method according to claim 1 or 2, **characterized in that** the first region (21) is a rectangular region, wherein the pixel (P) associated to the pixel value to which said filter (2) is applied is arranged in the center of said first region (21), and wherein said first region (21) comprises a bisector (23) which is aligned with said direction (D), and wherein particularly said first region (21) comprises a longer side (L) running parallel to said bisector (23) as well as a shorter side (S) running across said bisector (23).

4. Method according to claims 2 and 3, **characterized in that** the second region (22) is centered around the pixel (P) associated to the respective pixel value to which said filter (2) is applied, wherein said second region (22) comprises an outer boundary (22a) delimiting said second region (22), which outer boundary (22a) particularly forms a rectangle, particularly a square.

5. Method according to claim 1 or 2, **characterized in that** the first region (25) is a semicircular first region (25) delimited by an arc-shaped boundary section (25a) and a straight boundary section (25b), and wherein particularly the second region (26) is a semicircular second region (26) delimited by an arc-shaped boundary section (26a) and a straight boundary section (26b), which straight boundary section (26b) is arranged adjacent to or coincides with the straight boundary section (25a) of the first region (25) so that the first and the second region (25, 26) form a circular region, wherein particularly the pixel (P) associated to the respective pixel value to which said filter (2') is applied is arranged in the center or adjacent to the center of said circular region, or either in the first or in the second region (25, 26), particularly in the center or adjacent to the center of the straight boundary section (25b, 26b) of the first or the second region (25, 26), and wherein particularly the two semicircular regions (25, 26) are oriented such that said direction (D) runs parallel to said straight boundary sections (25b, 26b) and particularly extends from the pixel (P) associated to the respective pixel value to which the filter (2') is applied.

6. Method according to one of the preceding claims, **characterized in that** said image (1) is filtered by a plurality of filters (2, 2', 2"), wherein each of said filters (2, 2', 2") assigns to each pixel (P) of said image (1) a filter value, wherein particularly three filters (2) are applied to the pixel value of each of said pixels (P), wherein particularly the shorter sides (S) of the first regions (21) of said filters (2) each have a length (n'), wherein particularly each length (n') differs from the other lengths (n').

7. Method according to one of the preceding claims, **characterized in that** before filtering said image (1), configuration data associated to said image (1) is generated comprising image-related information, particularly at least one of: the scale of said image (1), expected diameters of the anatomic structures recorded in said image (1), dimensions of the first and second region of said at least one filter (2, 2', 2") or said plurality of filters (2, 2', 2") for filtering said image.

8. Method according to one of the preceding claims, **characterized in that** after filtering the image (1), a best-filter value for each pixel (P) of the image (1) is determined for segmenting the image (1), wherein said best-filter value is particularly the highest absolute filter value associated to each pixel (P) of said image (1) returned from said filter (2, 2', 2") or said plurality of filters (2, 2', 2"), and wherein pixels having best-filter values exceeding a pre-definable threshold value are identified, and wherein the entirety of identified pixels form the foreground regions of the segmented image, and wherein particularly segmenting of the image (1) is conducted by applying a seeded region growing method (3) to best-filter values of the image (1).

9. Method according to claim 8, **characterized in that** after estimating the segmented image (1), a path (40) located in the center of the contour of said foreground regions is determined, wherein pixels comprised by said path (40) are vertices of said path (40), wherein said path (40) is particularly a particularly morphological skeleton (41) of said foreground regions of said segmented image (1), and wherein particularly after or while determining said path (40) and said vertices (100) corresponding to said path (40), a weight function is defined for every edge (101) connecting any two vertices (100) comprised in said path (40), wherein the respective weight function value is particularly proportional to the Euclidean distance between the respective two vertices (100), and wherein particularly after determining said path (40) and said vertices (100) comprised in said path (40), a minimum spanning tree (50) of edges (101) connecting said vertices (100) is determined, wherein particularly said minimum spanning tree (50) connects all vertices (100) comprised in said path (40), and wherein particularly said minimum spanning tree (50) has a combined weight that is the sum of all weight function values of edges of said minimum spanning tree (50), and wherein particularly said combined weight is particularly less than or equal to the weight of any other subset of edges (101) connecting all of said vertices (100) comprised in said path (40).

10. Method according to claim 9, **characterized in that** after estimating said minimum spanning tree (50) connecting all vertices (100), edges exceeding a predefined weight function value are removed from said minimum spanning tree (50), wherein the minimum spanning tree (50) is not split or split into a plurality of disjunct minimum spanning trees (51), and wherein particularly after removing edges (101) exceeding said predefined weight function value, each of said at least one minimum spanning trees (51) is approximated by a polygonal path (60), particularly by means of a split and merge method (61).

11. Method according to at least one of the preceding claims, **characterized in that** a set of parameters (70) associated to the image (1) is determined, said set of parameters (70) comprising at least one of: the length of the polygonal path (60), the number of vertices (100) directly connected to more than two vertices (100), the number of pixels of the foreground regions, the number of pixels of the segmented image, the fractal dimension of the segmented image, or a lacunarity of the segmented image.

12. Method according to claim 11, **characterized in that** after determining said set of parameters (70) associated to the image (1), said method is applied to another image and the determined parameters from said another image are compared to the parameters (70) associated to the image previously processed.

13. Method according to one of the preceding claims, **characterized in that,** the image (1) is a region (11) comprised in a larger image or an image of an image stack, an image stream or a sequence of images.

14. Method according to claims 8 and 9, **characterized in that** after segmenting said image (1) and before estimating said path (40), a first and a second pixel forming end points of an anatomic structure that could not be segmented automatically are selected, wherein a missed structure between said end points is determined by means of a Dijkstra algorithm.

15. Computer program comprising program code for conducting the method according to one of the claims 1 to 14 when executed on a computer.

Figure 1

**Video Sequence**

11

12 — Define Mask

Select Frame

1 — Input Image → **O-DOB filtering** — 2

13 — Define ROI

3 — Seeded Region Growing ◄— In-/Decrease Regions — 14

All vessels detected? — 80

15 — Fill Gaps, Delete Regions

50, 51 — Minimal Spanning Trees ◄ **Skeleton** — 40, 41

Split&Merge Simplification → **Building Statistics** → Continue?

60, 61 — 70

Output

Figure 2

Figure 3

Figure 4

Figure 5

Figure 6

Figure 7

60, 61

Figure 8

Figure 9

Figure 10

Figure 11

Figure 12

Figure 13

Figure 14

Figure 15

Figure 16

## EUROPEAN SEARCH REPORT

Application Number

EP 13 17 6627

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERIK RODNER ET AL: "Difference of Boxes Filters Revisited: Shadow Suppression and Efficient Character Segmentation", DOCUMENT ANALYSIS SYSTEMS, 2008. DAS '08. THE EIGHTH IAPR INTERNATIONAL WORKSHOP ON, IEEE, PISCATAWAY, NJ, USA, 16 September 2008 (2008-09-16), pages 263-269, XP031360494, ISBN: 978-0-7695-3337-7 * abstract * * page 264, left-hand column, last paragraph - page 266, right-hand column, paragraph 1 * ----- | 1-15 | INV. G06T7/00 |
| A | GEUSEBROEK J ET AL: "Fast anisotropic gauss filtering", IEEE TRANSACTIONS ON IMAGE PROCESSING, IEEE SERVICE CENTER, PISCATAWAY, NJ, US, vol. 12, no. 8, 1 August 2003 (2003-08-01), pages 938-943, XP011099199, ISSN: 1057-7149, DOI: 10.1109/TIP.2003.812429 * abstract * * page 938, left-hand column, line 1 - right-hand column, line 8 * * figures 1-3 * ----- | 1-15 | |
| | | | TECHNICAL FIELDS SEARCHED (IPC) |
| | | | G06T |
| A | WO 2005/031649 A1 (SIEMENS MEDICAL SOLUTIONS [US]; CATHIER PASCAL [US]) 7 April 2005 (2005-04-07) * abstract * * page 3, line 10 - line 19 * * page 7, line 1 - page 8, line 13 * ----- | 1-15 | |

The present search report has been drawn up for all claims

| Place of search | Date of completion of the search | Examiner |
|---|---|---|
| Munich | 25 November 2013 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 827 298 A1

**ANNEX TO THE EUROPEAN SEARCH REPORT
ON EUROPEAN PATENT APPLICATION NO.**

EP 13 17 6627

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2013

| Patent document cited in search report | Publication date | Patent family member(s) | Publication date |
|---|---|---|---|
| WO 2005031649 A1 | 07-04-2005 | CN 1853197 A<br>DE 112004001691 T5<br>JP 4463817 B2<br>JP 2007505711 A<br>US 2005105829 A1<br>WO 2005031649 A1 | 25-10-2006<br>20-07-2006<br>19-05-2010<br>15-03-2007<br>19-05-2005<br>07-04-2005 |

EPO FORM P0459

For more details about this annex : see Official Journal of the European Patent Office, No. 12/82

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. ADAMS ; L. BISCHOF.** Seeded region growing. *TPAMI,* 1994, vol. 16 (6), 641-647
- **Y. ROUCHDY ; L.D. COHEN.** Retinal blood vessel segmentation using geodesic voting methods. *ISBI,* 2012, 744-747
- **R. SOCHER ; A. BARBU ; D. COMANICIU.** A learning based hierarchical model for vessel segmentation. *ISBI,* 2008, 1055-1058
- **L. XU ; S. LUO.** A novel method for blood vessel detection from retinal images. *BioMedical Engineering OnLine,* 2010, vol. 9 (1), 14
- **ZHENG, H. WANG ; J. WU ; J. GAO ; J.C. GEE.** Multiscale analysis revisited: Detection of drusen and vessel in digital retinal images. *ISBI,* 2011, 689-692
- **R. SEDGEWICK ; K. WAYNE.** *Algorithms, Pearson,* 2011
- **F. COSTA ; R. M. CESAR.** Shape Analysis and Classification. CRC Press, 2001
- **S.W. ZUCKER.** Region Growing: childhood and adolescence. *Computer Graphics Image Processing,* 1976, vol. 5, 382-399